Europäisches Patentamt

European Patent Office

Office européen des brevets

(19)

(11) Veröffentlichungsnummer : **0 190 433**
**B1**

(12) **EUROPÄISCHE PATENTSCHRIFT**

(45) Veröffentlichungstag der Patentschrift :
02.12.87

(21) Anmeldenummer : 85115515.0

(22) Anmeldetag : 06.12.85

(51) Int. Cl.⁴ : **C 08 F   2/20**, C 08 F 20/12,
C 08 F 12/00, C 08 F265/02

(54) **Verfahren zur Herstellung von Suspensionspolymerisaten.**

(30) Priorität : 02.02.85 DE 3503584

(43) Veröffentlichungstag der Anmeldung :
13.08.86 Patentblatt 86/33

(45) Bekanntmachung des Hinweises auf die Patenterteilung : 02.12.87 Patentblatt 87/49

(84) Benannte Vertragsstaaten :
BE FR GB IT NL

(56) Entgegenhaltungen :
DE-A- 1 942 423
CHEMICAL ABSTRACTS, Band 95, Nr. 2, Juli 1981,
Seite 18, Zusammenfassung Nr. 25888v, Columbus,
Ohio, US; & RO - A - 70 745 (INSTITUTUL DE
CERCETARI PENTRU PRODUSE AUXILIARE ORGA-
NICE, MEDIAS) 24-06-1980

(73) Patentinhaber : Degussa Aktiengesellschaft
Weissfrauenstrasse 9
D-6000 Frankfurt am Main 1 (DE)

(72) Erfinder : Hölle, Hans-Joachim, Dr.
In den Steinäckern 10
D-6458 Rodenbach 1 (DE)
Erfinder : Morlock, Gerhard, Dr.
Wildaustrasse 3
D-6450 Hanau 9 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft ein Verfahren zur Herstellung von Suspensionspolymerisaten durch Polymerisation von Estern der Acrylsäure oder der Methacrylsäure oder von Vinylaromaten oder von Monomergemischen, die überwiegend aus solchen Monomeren bestehen, in wäßriger Suspension und in Gegenwart eines Homopolymerisats der Acrylsäure oder der Methacrylsäure oder eines Mischpolymerisats, das sich zu wenigstens 50 Gewichtsprozent aus Acrylsäure oder Methacrylsäure herleitet, in Form der freien Säure oder deren Alkalimetall- oder Ammoniumsalz.

Die Suspensionspolymerisation von Estern der Acrylsäure oder der Methacrylsäure oder von Vinylaromaten oder von Monomergemischen, die überwiegend aus solchen Monomeren bestehen, ist grundsätzlich bekannt.

Es ist auch bekannt, bei solchen Polymerisationen als Dispergiermittel Homopolymerisate der Acrylsäure oder der Methacrylsäure oder Mischpolymerisate, die sich zu wenigstens 50 Gewichtsprozent aus diesen Säuren herleiten, zu verwenden. Diese Polymerisate können in Form der freien Säuren oder als Alkalimetall- oder Ammoniumsalze eingesetzt werden. Sie haben den Vorteil, daß sie im allgemeinen leicht durch Auswaschen der gebildeten Polymerisatperlen entfernt werden können. Weniger erfreulich ist jedoch die Tatsache, daß sich die üblichen Maßnahmen zur Steuerung der durchschnittlichen Perlgröße, wie Variation der Rührerdrehzahl und/oder der Dispergiermittelmenge, bei Verwendung dieser Polymerisate als wenig wirksam erweisen. Insbesondere ist es schwierig, relativ grobe Perlen (mittlerer Durchmesser etwa 0,3 bis 1 mm) herzustellen, da bei zu starker Erniedrigung der Rührerdrehzahl und/oder der Dispergiermittelmenge die Stabilität der Suspension nicht mehr gewährleistet ist.

Die Bildung von relativ groben Perlen ist jedoch häufig sehr erwünscht, weil sie sich leichter als feine Perlen aus der wäßrigen Suspension abtrennen lassen und in der Regel infolge ihrer geringeren spezifischen Oberfläche weniger Verunreinigungen enthalten.

Das erfindungsgemäße Verfahren ist nun dadurch gekennzeichnet, daß man die Polymerisation unter Zusatz von 0,004 bis 0,2 Gewichtsprozent, bezogen auf das im Polymerisationssystem vorhandene Wasser, mindestens eines Mono- oder Diesters der Phosphorsäure mit einem Alkanol mit 1 bis 8 Kohlenstoffatomen vornimmt.

Bevorzugt werden die Phosphorsäureester in einer Menge von 0,02 bis 0,08 Gewichtsprozent zugesetzt. Die Alkoholreste können geradkettig oder, falls sie mindestens 3 Kohlenstoffatome enthalten, auch verzweigt sein. Im Falle der Diester können die beiden Alkoholreste gegebenenfalls voneinander verschieden sein, zweckmäßiger ist es aber natürlich, wenn sie gleich sind.

Bevorzugt werden ferner Phosphorsäureester mit einem Alkanol mit 2 bis 6 Kohlenstoffatomen, insbesondere mit 4 Kohlenstoffatomen, eingesetzt. Ganz besonders bevorzugt sind Gemische aus 20 bis 80 Gewichtsprozent Mono-n-butylphosphat und 80 bis 20 Gewichtsprozent Di-n-butylphosphat.

Die Phosphorsäureester werden zweckmäßigerweise der Wasserphase zugesetzt, im Prinzip können sie jedoch auch der Monomerphase zugesetzt werden. Obwohl ihr Zusatz nur in relativ geringer Menge erfolgt, haben sie dennoch überraschenderweise einen sehr ausgeprägten Einfluß auf die durchschnittliche Größe der gebildeten Polymerisatperlen. Und zwar gilt im allgemeinen, daß mit steigender Zusatzmenge der Phosphorsäureester die Polymerisatperlen gröber werden. Außerdem ist zu beobachten, daß in der Regel unter sonst gleichen Bedingungen eine geringere Zusatzmenge an Phosphorsäureestern mit einem Alkanol größerer Kohlenstoffzahl eine ähnliche Wirkung hat wie eine größere Zusatzmenge an Phosphorsäureestern mit einem Alkanol geringerer Kohlenstoffzahl.

Häufig bringen die erfindungsgemäß zugesetzten Phosphorsäureester den zusätzlichen Vorteil, daß die gebildeten Polymerisatperlen infolge verringerter elektrostatischer Aufladung eine verbesserte Rieselfähigkeit aufweisen.

Das erfindungsgemäße Verfahren eignet sich grundsätzlich für die Polymerisation aller Monomeren und Monomergemische aus der Gruppe der (Meth)acrylsäureester und/oder Vinylaromaten, die üblicherweise in Suspension polymerisiert werden. Zweckmäßigerweise sollten die Monomeren so ausgewählt werden, daß das gebildete Polymerisat eine Glasübergangstemperatur von mindestens 30 °C aufweist, damit ein Verkleben der gebildeten Polymerisatperlen vermieden wird.

Geeignete Monomere sind vor allem die Ester der Acrylsäure und Methacrylsäure mit einwertigen Alkoholen, insbesondere solchen mit 1 bis 16 Kohlenstoffatomen, wie Methacrylsäuremethylester, Methacrylsäureethylester, Methacrylsäure-n-butylester, Methacrylsäure-isobutylester, Methacrylsäure-2-ethylhexylester, Methacrylsäurelaurylester, Methacrylsäurestearylester, Acrylsäuremethylester, Acrylsäureäthylester, Acrylsäure-n-butylester, Acrylsäure-tert. butylester, Acrylsäure-2-ethylhexylester oder Acrylsäurelaurylester, und Vinylaromaten, wie Styrol, Vinyltoluol, p-tert. Butylstyrol oder α-Methylstyrol.

Als Bestandteile von Monomergemischen eignen sich auch Monomere mit einer weiteren funktionellen Gruppe, wie α,β-ungesättigte Mono- oder Dicarbonsäuren, beispielsweise Acrylsäure, Methacrylsäure oder Itaconsäure ; Ester der Acrylsäure oder Methacrylsäure mit zweiwertigen Alkoholen, beispielsweise Hydroxyethylacrylat, Hydroxyethylmethacrylat, Hydroxypropylacrylat oder Hydroxypropylmethacrylat ; Acrylamid oder Methacrylamid ; Dimethylaminoethylacrylat oder Dimethylaminoethylmethacrylat. Der Anteil dieser Monomeren am jeweiligen Gemisch sollte wegen ihrer Wasserlöslichkeit zweckmäßigerweise auf maximal etwa 10 Gewichtsprozent begrenzt werden. Weitere geeignete Bestandteile von Monomergemischen sind beispielsweise Glycidylacrylat oder Glycidylmethacrylat.

Als Dispergiermittel dienen Homopolymerisate der Acrylsäure oder der Methacrylsäure oder Mischpolymerisate, die sich zu wenigstens 50 Gewichtsprozent aus diesen Säuren herleiten und daneben noch bis zu 50 Gewichtsprozent an Bausteinen enthalten, die von mit Acrylsäure oder Methacrylsäure copolymerisierbaren Monomeren, insbesondere Methacrylsäuremethylester, stammen. Sofern diese Polymerisate in ausreichendem Maße wasserlöslich sind, werden sie vorzugsweise in Form der freien Säure eingesetzt. Erforderlichenfalls können sie aber auch in Form ihrer Alkalimetall- oder Ammoniumsalze verwendet werden. Besonders geeignete Dispergiermittel sind solche Polymerisate, die als freie Säuren in einer 10 gewichtsprozentigen wäßrigen Lösung eine bei Raumtemperatur gemessene dynamische Viskosität zwischen 80 und 2 000 mPa · s oder die als Alkalimetall- oder Ammoniumsalze in einer 6 gewichtsprozentigen wäßrigen Lösung eine bei Raumtemperatur gemessene dynamische Viskosität zwischen 200 und 10 000 mPa · s aufweisen. Diese Dispergiermittel werden zweckmäßigerweise in einer Menge von 0,05 bis 1 Gewichtsprozent, insbesondere von 0,1 bis 0,4 Gewichtsprozent, bezogen auf das im Polymerisationssystem vorhandene Wasser, angewandt. Sie werden vorteilhafterweise als 5 bis 30 gewichtsprozentige wäßrige Lösungen vorrätig gehalten und in dieser Form der Wasserphase zugesetzt.

Die Wasserphase kann außer dem Dispergiermittel natürlich auch noch weitere bei Suspensionspolymerisationen üblicherweise eingesetzte Zusätze enthalten, beispielsweise Säuren oder saure Salze zur Einstellung des pH, wie Schwefelsäure oder Kaliumbisulfat ; Puffersalze, wie Dinatriumhydrogenphosphat oder Natriumdihydrogenphosphat ; oder Neutralsalze zur Zurückdrängung der Löslichkeit von wasserlöslichen Monomeren, wie Natriumsulfat.

Als Polymerisationsinitiatoren, die in der Regel der Monomerphase zugesetzt werden, dienen die üblicherweise verwendeten radikalischen Initiatoren, insbesondere Peroxide und Azoverbindungen mit Zerfallstemperaturen unterhalb von 120 °C. Unter Umständen kann es vorteilhaft sein, ein Gemisch verschiedener Initiatoren einzusetzen. Die Einsatzmenge liegt im allgemeinen im Bereich zwischen 0,1 und 5 Gewichtsprozent, bezogen auf die Monomerphase. Geeignete Initiatoren sind beispielsweise Octanoylperoxid, Decanoylperoxid, Lauroylperoxid, Benzoylperoxid, Monochlorbenzoylperoxid, Dichlorbenzoylperoxid, p-Methylbenzoylperoxid, tert. Butylperpivalat, tert. Butylperoctoat, tert. Butylperbenzoat, Azobisisobuttersäurenitril oder Azobis-(2,4-dimethyl)-valeronitril.

Zur Einstellung des Molekulargewichts des gebildeten Polymerisats können der Monomerphase auch in üblicher Weise bis zu 8 Gewichtsprozent eines oder mehrerer an sich bekannter Kettenregler zugesetzt werden. Beispielsweise seien genannt : Mercaptane, wie n-Butylmercaptan, n-Octylmercaptan, n-Dodecylmercaptan oder tert. Dodecylmercaptan ; Thioglykolsäureester, wie Thioglykolsäureisooctylester oder Thioglykolsäurelaurylester ; aliphatische Chlorverbindungen ; Enoläther oder dimeres α-Methylstyrol.

Falls vernetzte Polymerisate hergestellt werden sollen, kann die Monomerphase auch bis zu etwa 10 Gewichtsprozent mehrfunktionelle Monomere enthalten, beispielsweise Ethylenglykoldi(meth)acrylat, Butandioldi(meth)acrylat oder Divinylbenzol.

Das erfindungsgemäße Verfahren kann prinzipiell in der bei der Suspensionspolymerisation üblichen Weise durchgeführt werden. Bei einer diskontinuierlichen Ausführungsform wird beispielsweise die Wasserphase, welche das Dispergiermittel, den oder die Phosphorsäureester und gegebenenfalls sonstige an sich übliche Zusätze bereits enthält, in einem geeigneten Polymerisationsgefäß vorgelegt und es wird die Monomerphase, die in der Regel bereits die monomerlöslichen Zusatzstoffe, wie Initiatoren, Kettenregler oder Gleitmittel, gelöst enthält, unter Rühren zugegeben. Der im Polymerisationssystem enthaltene Luftsauerstoff wird zweckmäßigerweise durch Evakuieren und Beaufschlagung mit Stickstoff entfernt. Die Polymerisation wird durch Aufheizen des Ansatzes in Gang gebracht.

Das Monomer/Wasser-Verhältnis liegt in der Regel zwischen 1 : 4 und 1 : 1. Die Polymerisationstemperatur liegt üblicherweise zwischen etwa 60 und etwa 120 °C. Je nach dem angewandten Monomer/Wasser-Verhältnis erfolgt die Polymerisation adiabatisch oder unter zumindest teilweiser Abführung der Polymerisationswärme durch Kühlung.

Nach beendeter Polymerisation wird der Ansatz abgekühlt und die gebildeten Polymerisatperlen werden durch Filtration oder Zentrifugation abgetrennt. Zweckmäßigerweise werden sie gleich auf dem Filter oder in der Zentrifuge mit Wasser ausgewaschen. Anschließend werden sie in einem geeigneten Trockner, beispielsweise in einem Trockenofen oder in einem Wirbelschichttrockner getrocknet.

Die Erfindung wird durch die nachfolgenden Beispiele und Vergleichsversuche näher erläutert. Alle Prozentangaben bedeuten Gewichtsprozente. An den hergestellten Polymerisatperlen wird nach der Rosin-Rammler-Sperling-Auftragung der statistische Korndurchmesser d' (für 36,8 % Siebrückstand) und der Gleichmäßigkeitskoeffizient n bestimmt.

Beispiel 1

In einem 5 l-Polymerisationsgefäß, ausgestattet mit Rührer, Rückflußkühler und Thermometer, wurde ein Gemisch aus 3 150 g vollentsalztem Wasser, 48 g einer 10 prozentigen wäßrigen Polyacrylsäurelösung mit einer dynamischen Viskosität von 300 mPa · s, 1 g Mono-n-butylphosph und 1 g Di-n-butylphosphat vorgelegt und auf 70 °C erwärmt. Unter Rühren wurden nun 1 600 g eines Gemisches aus 50 Gewichtsteilen Methylmethacrylat, 49 Gewichtsteilen n-Butylmethacrylat, 1 Gewichtsteil Methacrylsäure, 0,7 Gewichtsteilen n-Dodecylmercaptan und 0,6 Gewichtsteilen Dilauroylperoxid zugegeben. Der Ansatz wurde 3 Stunden lang in einem Wasserbad von 75 °C gerührt und dann auf Raumtemperatur abgekühlt. Die Polymerisatperlen wurden abfiltriert, gründlich mit vollentsalztem Wasser ausgewaschen und in einem Wirbelbetttrockner bei einer Zulufttemperatur von 70 °C getrocknet. Es wurden 1 585 g agglomeratfreie Polymerisatperlen mit einem statistischen Korndurchmesser d' von 0,80 mm und einem Gleichmäßigkeitskoeffizienten n von 5 erhalten. Die Perlen zeichneten sich durch hohe Brillianz, gleichmäßige kugelförmige Gestalt und gute Rieselfähigkeit aus. Eine 30 prozentige Lösung in Xylol war völlig klar.

Beispiel 2

Das Beispiel 1 wurde wiederholt mit dem einzigen Unterschied, daß nur jeweils 0,5 g der beiden Phosphorsäureester eingesetzt wurden.

Es wurden 1 570 g agglomeratfreie Polymerisatperlen mit einem statistischen Korndurchmesser d' von 0,45 mm und einem Gleichmäßigkeitskoeffizienten n von 5 erhalten. Die Perlen zeichneten sich ebenfalls durch hohe Brillianz und gleichmäßige Form aus. Eine 30 prozentige Lösung in Xylol war ebenfalls völlig klar.

Vergleichsversuch A

Das Beispiel 1 wurde erneut wiederholt, aber ohne Zusatz irgendwelcher Phosphorsäureester.

Das Filtrieren der gebildeten Polymerisatperlen verlief deutlich langsamer als in den Beispielen 1 und 2. Es wurden 1 540 g Polymerisatperlen mit einem statistischen Korndurchmesser d' von 0,20 mm und einem Gleichmäßigkeitskoeffizienten n von 4 erhalten. Eine 30 prozentige Lösung in Xylol wies eine leichte Trübung auf.

Beispiel 3

In einem 5 l-Polymerisationsgefäß, ausgestattet mit Rührer, Rückflußkühler und Thermometer, wurde ein Gemisch aus 3 130 g vollentsalztem Wasser, 64 g einer 10 prozentigen wäßrigen Polyacrylsäurelösung mit einer dynamischen Viskosität von 300 mPa · s, 0,65 g Mono-n-butylphosphat und 0,65 g Di-n-butylphosphat vorgelegt und auf 70 °C erwärmt. Unter Rühren wurden nun 1 600 g eines Gemisches aus 100 Gewichtsteilen Isobutylmethacrylat, 0,8 Gewichtsteilen n-Dodecylmercaptan und 0,8 Gewichtsteilen Dilauroylperoxid zugegeben. Der Ansatz wurde 3 Stunden lang in einem Wasserbad von 75 °C gerührt und dann auf Raumtemperatur abgekühlt. Die Polymerisatperlen wurden abfiltriert, gründlich mit vollentsalztem Wasser ausgewaschen und in einem Wirbelbetttrockner bei einer Zulufttemperatur von 60 °C getrocknet. Es wurden 1 576 g agglomeratfreie Polymerisatperlen mit einem statistischen Korndurchmesser d' von 0,50 mm und einem Gleichmäßigkeitskoeffizienten n von 5 erhalten. Die Perlen zeichneten sich durch eine hohe Brillianz und Reinheit aus. Eine 30 prozentige Lösung in Xylol war völlig klar.

Vergleichsversuch B

Das Beispiel 3 wurde wiederholt, aber ohne Zusatz irgendwelcher Phosphorsäureester.

Das Abfiltrieren der gebildeten Polymerisatperlen verlief deutlich langsamer als im Beispiel 3. Es wurden 1 556 g Polymerisatperlen mit einem statistischen Korndurchmesser d' von 0,15 mm und einem Gleichmäßigkeitskoeffizienten n von 4,5 erhalten. Eine 30 prozentige Lösung in Xylol wies eine leichte Trübung auf.

Beispiel 4

In einem 5 l-Polymerisationsgefäß, ausgestattet mit Rührer, Rückflußkühler und Thermometer, wurde ein Gemisch aus 2 740 g vollentsalztem Wasser, 140 g einer 6 prozentigen wäßrigen Lösung eines Mischpolymerisats aus 60 % Methacrylsäure und 40 % Methylmethacrylat in Form des Natriumsalzes mit einer dynamischen Viskosität von 1 400 mPa · s und 0,14 g Mono-n-octylphosphat vorgelegt und auf 70 °C erwärmt. Unter Rühren wurden nun 1 920 g eines Gemisches aus 100 Gewichtsteilen Methylmethacrylat, 0,1 Gewichtsteilen n-Dodecylmercaptan und 0,5 Gewichtsteilen Dilauroylperoxid zugegeben. Der Ansatz wurde 3 Stunden lang in einem Wasserbad von 75 °C gerührt und dann auf 60 °C abgekühlt. Die Polymerisatperlen wurden bei dieser Temperatur abzentrifugiert, gründlich mit vollentsalztem Wasser ausgewaschen und in einem Wirbelbetttrockner bei einer Zulufttemperatur von 90 °C getrocknet. Es wurden 1 905 g klare, im wesentlichen agglomeratfreie und gut rieselfähige Polymerisatperlen mit einem statistischen Korndurchmesser d' von 0,35 mm und einem Gleichmäßigkeitskoeffizienten n von 4,5 erhalten.

Beispiel 5

In einem 5 l-Polymerisationsgefäß, ausgestattet mit Rührer, Rückflußkühler und Thermometer, wurde ein Gemisch aus 3 080 g vollentsalztem Wasser, 128 g einer 10 prozentigen wäßrigen Polyacrylsäurelösung mit einer dynamischen Viskosität von 300 mPa · s und 0,32 g Diethylphosphat vorgelegt und auf 70 °C erwärmt. Unter Rühren wurden nun 1 600 g eines Gemisches aus 85 Gewichtsteilen Methylmethacrylat, 12 Gewichtsteilen Ethylacrylat, 3 Gewichtsteilen Methacrylsäure, 0,2 Gewichtsteilen Thioglykolsäureisooctylester und 0,6 Gewichtsteilen Dilauroylperoxid zugegeben. Der Ansatz wurde 3 Stunden lang in einem Wasserbad von 70 °C gerührt und dann auf 60 °C abgekühlt. Die Polymerisatperlen wurden bei dieser Temperatur abzentrifugiert, gründlich mit vollentsalztem Wasser ausgewaschen und in einem Wirbelbetttrockner bei einer Zulufttemperatur von 90 °C getrocknet. Es wurden 1 585 g klare, im wesentlichen agglomeratfreie und gut rieselfähige Polymerisatperlen mit einem statistischen Korndurchmesser d' von 0,40 mm und einem Gleichmäßigkeitskoeffizienten n von 4,5 erhalten.

Beispiel 6

In einem 5 l-Polymerisationsgefäß, ausgestattet mit Rührer, Rückflußkühler und Thermometer, wurde ein Gemisch aus 3 080 g vollentsalztem Wasser, 128 g einer 10 prozentigen wäßrigen Polyacrylsäurelösung mit einer dynamischen Viskosität von 300 mPa · s und 3,2 g Dimethylphosphat vorgelegt und auf 70 °C erwärmt. Unter Rühren wurden nun 1 600 g eines Gemisches aus 20 Gewichtsteilen n-Butylmethacrylat, 80 Gewichtsteilen Styrol und 1 Gewichtsteil Dibenzoylperoxid (als 75 prozentiges wasserfeuchtes Pulver) zugegeben. Der Ansatz wurde 4 Stunden lang in einem Bad von 90 °C und noch 1 Stunde lang in einem Bad von 98 °C gerührt und dann auf 40 °C abgekühlt. Die Polymerisatperlen wurden bei dieser Temperatur abzentrifugiert, gründlich mit vollentsalztem Wasser ausgewaschen und in einem Wirbelbetttrockner bei einer Zulufttemperatur von 60 °C getrocknet. Es wurden 1 565 g klare, im wesentlichen agglomeratfreie und gut rieselfähige Polymerisatperlen mit einem statistischen Korndurchmesser d' von 0,30 mm und einem Gleichmäßigkeitskoeffizienten n von 4 erhalten.

Beispiel 7

In einem 5 l-Polymerisationsgefäß, ausgestattet mit Rührer, Rückflußkühler und Thermometer, wurde ein Gemisch aus 3 100 g vollentsalztem Wasser, 96 g einer 10 prozentigen wäßrigen Polyacrylsäurelösung mit einer dynamischen Viskosität von 300 mPa · s und 1,6 g Di-n-butylphosphat vorgelegt und auf 70 °C erwärmt. Unter Rühren wurden nun 1 600 g eines Gemisches aus 30 Gewichtsteilen n-Butylacrylat, 70 Gewichtsteilen Styrol und 1,5 Gewichtsteilen Dibenzoylperoxid (als 75 prozentiges wasserfeuchtes Pulver) zugegeben. Der Ansatz wurde 4 Stunden lang in einem Bad von 90 °C und noch 1 Stunde lang in einem Bad von 98 °C gerührt und dann auf 40 °C abekühlt. Die Polymerisatperlen wurden bei dieser Temperatur abzentrifugiert, gründlich mit vollentsalztem Wasser ausgewaschen und in einem Wirbelbetttrockner bei einer Zulufttemperatur von 50 °C getrocknet. Es wurden 1 562 g klare, im wesentlichen agglomeratfreie und gut rieselfähige Polymerisatperlen mit einem statistischen Korndurchmesser d' von 0,42 mm und einem Gleichmäßigkeitskoeffizienten n von 5 erhalten.

Beispiel 8

In einem 5 l-Polymerisationsgefäß, ausgestattet mit Rührer, Rückflußkühler und Thermometer, wurde ein Gemisch aus 3 100 g vollentsalztem Wasser, 96 g einer 10 prozentigen wäßrigen Polyacrylsäurelösung mit einer dynamischen Viskosität von 300 mPa · s und 1,6 g Mono-n-butylphosphat vorgelegt und auf 70 °C erwärmt. Unter Rühren wurden nun 1 600 g eines Gemisches aus 8 Gewichtsteilen 2-Ethylhexylacrylat, 2 Gewichtsteilen Methacrylsäure, 10 Gewichtsteilen Styrol, 80 Gewichtsteilen Isobutylmethacrylat, 0,6 Gewichtsteilen n-Dodecylmercaptan und 1,0 Gewichtsteilen Dilauroylperoxid zugegeben. Der Ansatz wurde 3 Stunden lang in einem Wasserbad von 80 °C gerührt und dann auf 30 °C abgekühlt. Die Polymerisatperlen wurden bei dieser Temperatur abzentrifugiert, gründlich mit vollentsalztem Wasser ausgewaschen und in einem Wirbelbetttrockner bei einer Zulufttemperatur von 50 °C getrocknet. Es wurden 1 578 g klare, im wesentlichen agglomeratfreie und gut rieselfähige Polymerisatperlen mit einem statistischen Korndurchmesser d' von 0,45 mm und einem Gleichmäßigkeitskoeffizienten n von 4,5 erhalten.

**Patentansprüche**

1. Verfahren zur Herstellung von Suspensionspolymerisaten durch Polymerisation von Estern der Acrylsäure oder der Methacrylsäure oder von Vinylaromaten oder von Monomergemischen, die überwiegend aus solchen Monomeren bestehen, in wäßriger Suspension und in Gegenwart eines Homopolymerisats der Acrylsäure oder der Methacrylsäure oder eines Mischpolymerisats, das sich zu wenigstens 50 Gewichtsprozent aus Acrylsäure oder Methacrylsäure herleitet, in Form der freien Säure oder deren Alkalimetall- oder Ammoniumsalz, dadurch gekennzeichnet, daß man die Polymerisation unter Zusatz von 0,004 bis 0,2 Gewichtsprozent, bezogen auf das im Polymerisationssystem vorhandene Wasser, mindestens eines Mono- oder Diesters der Phosphorsäure mit einem Alkanol mit 1 bis 8 Kohlenstoffatomen vornimmt.

2. Verfahren nach Anspruch 1, dadurch gekennzeichnet, daß man den Mono- oder Diester der Phosphorsäure in einer Menge von 0,02 bis 0,08 Gewichtsprozent zusetzt.

3. Verfahren nach Anspruch 1 oder 2, dadurch gekennzeichnet, daß man mindestens einen Mono- oder Diester der Phosphorsäure mit einem Alkanol mit 2 bis 6 Kohlenstoffatomen einsetzt.

4. Verfahren nach einem der Ansprüche 1 bis 3, dadurch gekennzeichnet, daß man mindestens einen Mono- oder Diester der Phosphorsäure mit einem Alkanol mit 4 Kohlenstoffatomen einsetzt.

5. Verfahren nach einem der Ansprüche 1 bis 4, dadurch gekennzeichnet, daß man ein Gemisch aus 20 bis 80 Gewichtsprozent Mono-n-butylphosphat und 80 bis 20 Gewichtsprozent Di-n-butylphosphat einsetzt.

## Claims

1. A process for the production of suspension polymers by polymerisation of esters of acrylic acid or of methacrylic acid or of vinyl aromatic substances or of monomer mixtures composed predominantly of these monomers, in aqueous suspension and in the presence of a homopolymer of acrylic acid or of methacrylic acid or of a mixed polymer derived by at least 50 % by weight from acrylic acid or methacrylic acid, in the form of the free acid or the alkali metal or ammonium salt thereof, characterised in that polymerisation is carried out with addition of from 0.004 to 0.2 % by weight, based on the water present in the polymerisation system, of at least one monoester or diester of phosphoric acid with an alkanol containing from 1 to 8 carbon atoms.

2. A process according to Claim 1, characterised in that the monoester or diester of phosphoric acid is added in a quantity of from 0.02 to 0.08 % by weight.

3. A process according to Claim 1 or 2, characterised in that at least one monoester or diester of phosphoric acid with an alkanol containing from 2 to 6 carbon atoms is used.

4. A process according to one of Claims 1 to 3, characterised in that at least one monoester or diester of phosphoric acid with an alkanol containing 4 carbon atoms is used.

5. A process according to one of Claims 1 to 4, characterised in that a mixture of from 20 to 80 % by weight of mono-n-butylphosphate and from 80 to 20 % by weight of di-n-butylphosphate is used.

## Revendications

1. Procédé pour la fabrication de polymérisats en suspension par polymérisation d'esters de l'acide acrylique ou de l'acide méthacrylique, ou de vinyles aromatiques, ou de mélanges de monomères qui sont constitués principalement par des monomères de ce genre, en suspension aqueuse, et en présence d'un homopolymérisat de l'acide acrylique ou de l'acide méthacrylique, ou d'un polymérisat mixte qui dérive, à raison d'au moins 50 % en poids d'acide acrylique ou méthacrylique, sous la forme d'acide libre ou de ses sels de métaux alcalins ou d'ammonium, procédé caractérisé en ce que la polymérisation est effectuée avec addition de 0,004 à 0,2 % en poids, calculé sur le poids d'eau existant dans le système de polymérisation, d'au moins un mono- ou diester de l'acide phosphorique avec un alcanol contenant 1 à 8 atomes de carbone.

2. Procédé suivant la revendication 1, caractérisé en ce que le mono- ou diester de l'acide phosphorique est utilisé dans la proportion de 0,02 à 0,08 % en poids.

3. Procédé suivant l'une des revendications 1 ou 2, caractérisé en ce qu'il est mis en œuvre au moins un mono- ou diester de l'acide phosphorique avec un alcanol de 2 à 6 atomes de carbone.

4. Procédé suivant l'une des revendications 1 à 3, caractérisé en ce qu'il est mis en œuvre au moins un mono- ou diester de l'acide phosphorique avec un alcanol à 4 atomes de carbone.

5. Procédé suivant l'une des revendications 1 à 4, caractérisé en ce qu'il est mis en œuvre un mélange de 20 à 80 % en poids de phosphate de mono-n-butyle, et 80 à 20 % en poids de phosphate de di-n-butyle.